# EUROPEAN PATENT SPECIFICATION

(11) **EP 4 524 718 B1**
(45) Date of publication and mention of the grant of the patent: **30.09.2026**
(21) Application number: 24194008.9
(22) Date of filing: 12.08.2024
(51) Int. Cl.: G06F 3/12

(54) **IMAGE PROCESSING METHOD AND APPARATUS, ELECTRONIC APPARATUS, AND STORAGE MEDIUM**
BILDVERARBEITUNGSVERFAHREN UND -VORRICHTUNG, ELEKTRONISCHE VORRICHTUNG UND SPEICHERMEDIUM
PROCÉDÉ ET APPAREIL DE TRAITEMENT D'IMAGE, APPAREIL ÉLECTRONIQUE ET SUPPORT D'INFORMATIONS

(30) Priority: 24.08.2023 CN 202311075748
(43) Date of publication of application: 19.03.2025
(73) Proprietor: Beijing Pantum Information Technology Co., Ltd., Beijing (CN)
(72) Inventor: HUANG, Yu, Beijing (CN)
(74) Representative: Sun, Yiming

(56) References cited:
- EP-A2- 2 093 708
- JP-A- 2012 014 586
- US-A1- 2017 364 317

## Description

### TECHNICAL FIELD

The present disclosure relates to the technical field of image processing and, in particular, to an image processing method and apparatus, an electronic apparatus, and a storage medium.

### BACKGROUND

When a page description language (PDL) printer executes a print job, each page to be printed is data independent of an imaging device (e.g., printer). The page requires a PDL interpreter on the printer to follow a PDL instruction to render the page to be printed.

If a page to be printed contains multiple images, a corresponding number of image PDL instructions will be generated based on the multiple images. When printing, it takes time to analyze each PDL instruction and perform raster operations on the image on the page, thus affecting printing speed.

JP2012014586A provides the printing control program which can improve the print quality of the region where different objects overlapped when performing a suitable rasterization process for every object. The information processing apparatus 100 is made to perform the following: Printing-object-data analysis step S10 which reads the data of the predetermined format which the application 31 produced, and analyzes the printing object data of data; Duplication printing-object-data detection step S20 which detects the printing object data with which a printing area mutually overlaps from the said data; Printing-object-data isolation step S40 which isolate printing object data into the said separate data; Image data conversion step S50 which converts printing object data into image data; Image process step S60 which gives the image process according to the kind of printing object data to image data; Synthetic step S70 which synthesize image data; Printing data generation step S80 which converts image data into printing data. The above-mentioned printing control program 30 is provided.

EP2093708A2 is determined whether the rasterization result of a rendering object is cached. If it is determined that the rasterization result of the rendering object is not cached, an image and a mask for the image are generated from the rendering object. The generated image and the generated mask are stored in a cache. If it is determined that the rasterization result of the rendering object is cached, an image and a mask are extracted from the cache. The extracted image is rendered on a portion of the extracted mask so that a background image remains on a portion other than the portion of the extracted mask.

### SUMMARY

So, the present invention provide an image processing method , APPARATUS, AND STORAGE MEDIUM, in order to help solve problems in the existing technology which is that when printing, it takes time to analyze each PDL instruction and perform raster operations on the image on the page, thus affecting printing speed. The present invention is defined by the appended claims.

One aspect of the present disclosure provides an image processing method that is applied to a driver-end device. In one possible implementation, the first page and the second page execute a position update using a same cursor.

In the second aspects of the present disclosure provides an image processing method that is applied to an image forming device. The image processing method includes restoring a page based on a received target page description language to obtain a third page. The image processing method includes performing different halftone conversions on an image and text from the third page. The image processing method further includes integrating the halftone converted image and text into a raster image, and executing printing based on the raster image.

In the third aspects of the present disclosure provides an image processing apparatus. The image processing apparatus includes a receiving unit, configured to obtain an image-to-be-printed and extract a text part and an image part from the image-to-be-printed. The image processing apparatus includes a processing unit, configured to convert all extracted image parts on one page into first image data, convert the extracted text part into a page description language, and generate an image instruction based on the first image data and inserting the image instruction into the page description language to form a target page description language. The image processing apparatus further includes a sending unit, configured to send the target page description language to an image forming device to execute an image forming job.

In the fourth aspects of the present disclosure provides an image processing apparatus. The image processing apparatus includes a page processing unit, configured to restore a page based on a received target page description language to obtain a third page and perform different halftone conversions on an image and text from the third page. The image processing apparatus further includes a printing unit, configured to integrate the halftone converted image and text into a raster image, and execute printing based on the raster image.

In the fifth aspects of the present disclosure provides an electronic apparatus, comprising at least one processor and a memory configured to store at least one instruction that, when being executed, causes the at least one processor to perform the image processing method that is applied to a driver-end device or the image processing method that is applied to an image forming device. In some embodiments, the electronic apparatus can be a chip or a chip module.

In the sixth aspects of the present disclosure provide non-transitory computer-readable storage medium storing a computer program that, when executed by a processor, causes the processor to perform the method according to the image processing method that is applied to a driver-end device or the image processing method that is applied to an image forming device.

In the seventh aspects of the present disclosure provide a computer program product, including a computer program or an instruction. When the computer program or the instruction is executed by the processor, the image processing method provided by any embodiment of the present disclosure is implemented.

### BRIEF DESCRIPTION OF THE DRAWINGS

In order to better convey embodiments of the present disclosure or the technical solutions, a brief introduction will be described below to the drawings that need to be used in the description of embodiments or technical solutions. Obviously, the drawings in the following description are some embodiments of the present disclosure. For those persons of ordinary skill in the art, other drawings can be obtained based on these drawings without exerting any creative effort.
FIG. 1 illustrates a schematic structural diagram of an image forming device according to one embodiment of the present disclosure.
FIG. 2 illustrates a schematic diagram of generating a multi-image page description language instruction.
FIG. 3 illustrates a schematic diagram of generating a multi-image page description language instruction according to one embodiment of the present disclosure.
FIG. 4 illustrates a schematic flow chart of an image processing method according to one embodiment of the present disclosure.
FIG. 5 illustrates a schematic diagram of page integration according to one embodiment of the present disclosure.
FIG. 6 illustrates a schematic diagram of an overlapping image part and a text part according to one embodiment of the present disclosure.
FIG. 7 illustrates a schematic flow chart of an image processing method according to another embodiment of the present disclosure.
FIG. 8 illustrates a schematic flow chart of an image processing method according to another embodiment of the present disclosure.
FIG. 9 illustrates a schematic structural diagram of an image processing apparatus according to one embodiment of the present disclosure.
FIG. 10 illustrates a schematic structural diagram of an image processing apparatus according to another embodiment of the present disclosure.
FIG. 11 illustrates a schematic structural diagram of an electronic apparatus according to one embodiment of the present disclosure.
(Embodiments shown in FIG. 8 and FIG. 10 are not encompassed by the wording of the claims but are considered as useful for understanding the invention.)

### DETAILED DESCRIPTION OF THE EMBODIMENTS

To better describe the purpose, technical solutions, and advantages of embodiments of the present disclosure, specific technical solutions of embodiments of the present disclosure will be further described in detail in conjunction with the drawings in embodiments of the present disclosure. The following examples are used to illustrate the present disclosure but are not intended to limit the scope of the present disclosure.

In the present disclosure, "at least one" refers to one or more. "Plurality" and "multiple" refer to two or more. "And/or" describes the association of associated objects, indicating that there can be three relationships, for example, A and/or B, which can mean: A exists alone, A and B exist simultaneously, and B exists alone, where A, B can be singular or plural. The character "/" generally indicates that the related objects are in an "or" relationship. "At least one of the following" or similar expressions refers to any combination of these items, including any combination of single item or plural items. For example, at least one of a, b, or c can mean: a, b, c, a-b, a-c, b-c, or a-b-c, where a, b, c can be single or multiple.

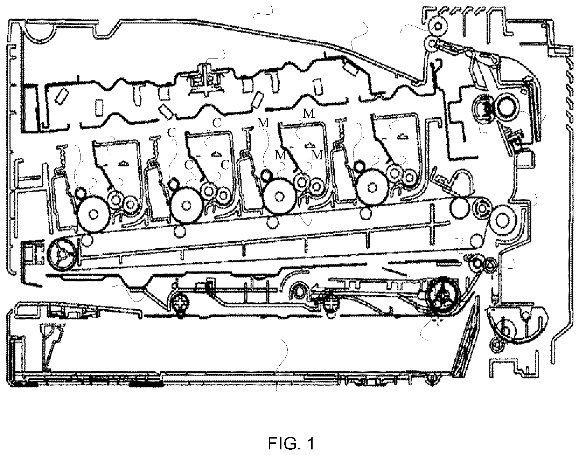

FIG. 1 is a schematic structural diagram of an image forming device according to one embodiment of the present disclosure.

As shown in FIG. 1, an image forming device 100 is used to perform an image forming job such as generating, printing, receiving, and transmitting image data. Examples of the image forming device 100 include a printer, a scanner, a copier, a fax machine, and a multi-functional peripheral (MFP) device that performs the above functions in a single device.

As an example of the image forming device 100, the image forming device 100 includes a photosensitive drum 101Y-K, a charging roller 102Y-K, a developing roller 103Y-K, a toner bin 104Y-K, a transfer belt 105, a secondary transfer roller 106, a paper feed cassette 107, a manual feed tray 108, a paper pickup roller 109, a transport roller 110, a paper detection sensor 120, a laser scanning unit (LSU) 111, a heat roller 112, a pressing roller 113, a discharge roller 114, a discharge paper cassette 115, and so on. Generally, processing cartridges C-M respectively include the photosensitive drum 101Y-K, the charging roller 102Y-K, the developing roller 103Y-K, and the toner bin 104Y-K for holding toner.

LSU 111 is in a form of a single LSU and includes four optical paths. Four charging rollers 102Y-K are used to charge surfaces of four photosensitive drums 101Y-K respectively. The four optical paths of the LSU 111 respectively emit laser beams to form electrostatic latent images on a surface of the photosensitive drum 101Y-K. Four developing rollers 103Y-K are used to respectively develop a toner image of one color on the surface of the photosensitive drum 101Y-K. The image forming device 100 adopts a secondary transfer method, that is, the four photosensitive drums 101Y-K sequentially transfer the toner image to the transfer belt 105, and then the color toner image formed on the transfer belt 105 is secondarily transferred to the paper via the secondary transfer roller 106. The paper feed cassette 107 is used to store papers. The paper pickup roller 109 is used to transport the stored paper to a transport path (i.e., the paper path will be described later). The transport roller 110 transports the paper to the secondary transfer roller 106.

The secondary transfer roller 106 transports an imaged paper to the heat roller 112 and the nip area of the pressing roller 113. The heat roller 112 and the pressing roller 113 are used to fix the toner image on the paper. The heat roller 112 can adopt a ceramic heating method. The heat roller 112 and the pressing roller 113 transport the fixed paper to the discharge roller 114. The discharge roller 114 discharges the paper to the discharge paper cassette 115 and stacks it.

Among them, the LSU 111 acquires an optical analog image signal of the original/source file through exposure of the optical print head. A paper detection sensor 120 is used to detect whether there is paper in the paper path where the paper detection sensor 120 is located.

The paper feed cassette 107 is provided with a paper outlet, and the paper pickup roller 109 is specifically used to send the paper stored in the paper feed cassette 107 from the paper outlet into the paper path for transfer requirements. The image forming device 100 also includes a driving unit (figure not shown) to drive operation of the paper pickup roller 109. The driving unit is a driving motor for driving the operation of the paper pickup roller 109 to realize the paper pickup operation. The driving unit 181 is electrically connected to a controller (figure not shown) of the image forming device, so that the controller can control the operation of the driving unit. The controller is electrically connected to the paper detection sensor 120, and the paper detection sensor sends the detection result information of whether there is paper in the paper path to the controller.

The image forming device 100 further includes an operation panel (figure not shown). The operation panel includes an operation part (figure not shown) composed of various keys and a touch panel display part (figure not shown).

It can be understood that the image forming device 100 listed above is only an example, and a component structure and a component arrangement of the image forming device 100 can be adjusted according to actual conditions without affecting the improvement ideas of the present disclosure.

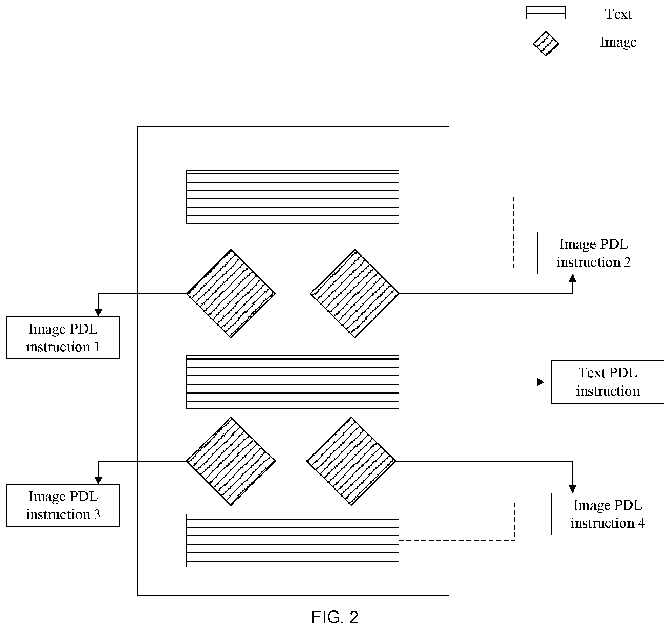

FIG. 2 is schematic diagram of generating a multi-image page description language instruction.

As shown in FIG. 2, if a page to be printed contains text and multiple images, a PDL printer will perform image processing based on the received image-to-be-printed during executing the print job, and convert the image into a page description language readable by the printer. If the image-to-be-printed contains multiple images, a corresponding number of image PDL instructions will be generated based on the multiple images. It takes time to analyze each PDL instruction during printing, which affects the printing speed. The image-to-be-printed described in embodiments of the present disclosure includes multiple images, which refers to graphic images.

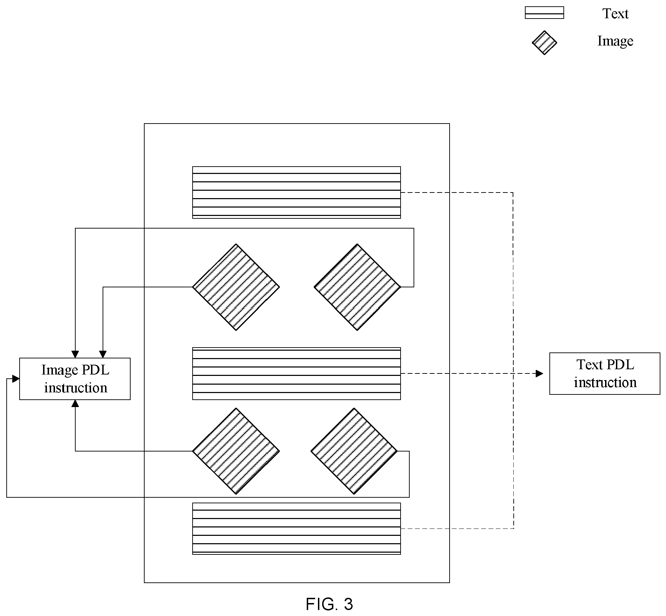

To address the issue, an embodiment of the present disclosure provides an image processing method. As shown in FIG. 3, through the method, when the image-to-be-printed contains multiple images, text of the image-to-be-printed can be converted into a page description language, and the multiple images of the image-to-be-printed can be treated as an entire image and inserted into the page description language through an image instruction, as a target page description language sent to the image forming device to perform an image forming operation. Therefore, the image forming device only needs to restore one image instruction, greatly improving the speed of image restoration and the speed of image generation (such as printing).

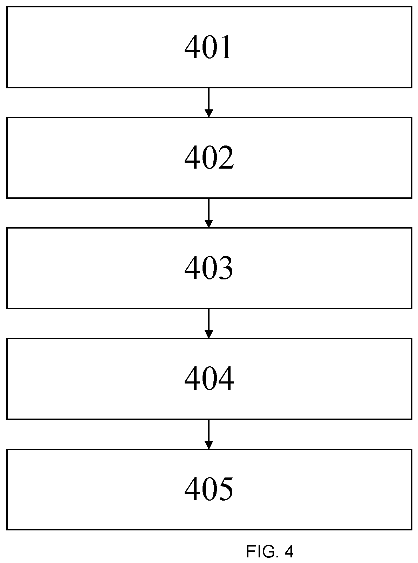

FIG. 4 is a schematic flow chart of an image processing method according to one embodiment of the present disclosure.

Referring to FIG. 4, the method includes several steps.

S401: Obtaining an image-to-be-printed and extract a text part and an image part from the image-to-be-printed.

In some embodiments, prior to extracting the text part and the image part from the image-to-be-printed, it can also detect whether the image-to-be-printed includes an image. If no image is included, text in the image-to-be-printed is directly converted into a page description language and sent to the image forming device (such as a printer) for printing. If an image is included, the text part and the image part are extracted from the image-to-be-printed.

S402: Converting all extracted image parts into first image data on one page.

In some embodiments, prior to S402, the following steps can also be included.

S10: Creating a first page and a second page, where the first page is used to describe the text part of the image-to-be-printed, and the second page is used to describe the image part of the image-to-be-printed.

S403: Converting an extracted text part into a page description language.

In some embodiments, the extracted text part can be converted into a page description language to obtain a rendered first page, and all extracted image parts can also be output using an image instruction of the page description language to obtain the rendered second page.

In some embodiments, the second page has a same size as a printed page size of the image forming device.

In some embodiments, converting all the extracted image parts into first image data on one page can convert all the extracted image parts into pixel level image data on one page (such as the second page). Among them, after the driver-end device extracts the image part of the image-to-be-printed, it renders the corresponding pixels on the second page based on all images. After the rendering is completed, a PDL image instruction is used to place it on the second page based on the area occupied by the image (that is, the position of each pixel point of the image).

In some embodiments, if the driver-end device cannot determine an image occupied area of the image part, all images can be integrated into one image and output to the second page through an image instruction.

In some embodiments, current positions of brushes (cursors) of the first page and the second page are identical. In other words, the first page and the second page can share a cursor. The updates of coordinates are synchronized with each other, that is, the coordinates are updated in a same way as when coordinates are rendered on a page.

S404: Generating one image instruction based on the first image data and inserting the image instruction into the page description language to form a target page description language.

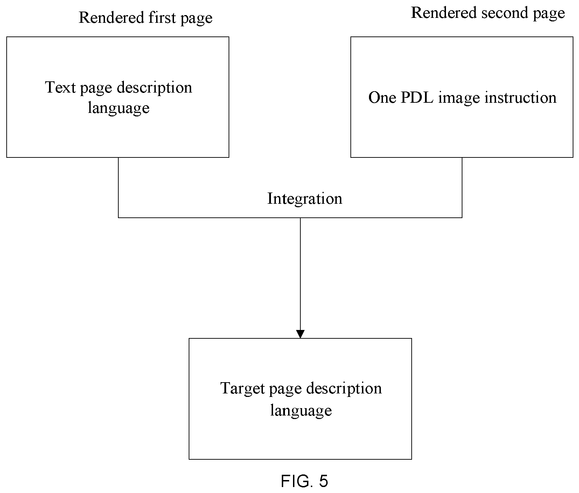

FIG. 5 is a schematic diagram of page integration according to one embodiment of the present disclosure.

Referring to FIG. 5, after acquiring the rendered first page and the second page, the rendered first page and the second page are integrated into a target page. The target page is sent to the image forming device (such as the printer) to execute an image formation job (such as performing a print job).

The rendered first page is a page rendered by converting the text part of the image-to-be-printed into a page description language. The rendered second page is a page rendered by outputting an image-part-to-be-printed through a PDL image instruction. Integrating the rendered first page and second page into the target page can specifically include inserting an image instruction corresponding to the image part into the page description language obtained by converting the text part, thereby obtaining the target page description language.

S405: Sending the target page description language to the image forming device to execute the image forming job.

Among them, when the image-to-be-printed includes multiple images, the target page description language sent to the image forming device also contains only one PDL image instruction. Based on this, when the image forming device performs page restoration after receiving the target page description language, only one image instruction is needed to restore, which greatly improves the speed of restoring the image of image forming device, thereby improving the printing speed of the image forming device, and ensuring the quality of the image.

In some application scenarios, the image part and the text part of the image-to-be-printed can overlap.

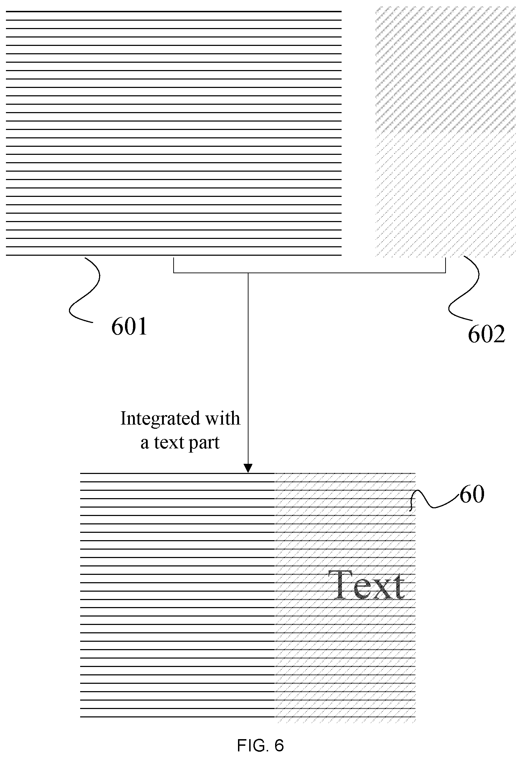

FIG. 6 is a schematic diagram of an overlapping image part and a text part provided by an embodiment of the present invention.

Referring to FIG. 6, there is overlap between the image part and the text part in the image-to-be-printed 60. Specifically, the image part includes an image 601 and an image 602. The text part is between the image 601 and the image 602, that is, the image 601 is at the bottom, the text part is in middle, and the image 602 is at the top, and the three overlap. When the image part overlaps with the text part of the image, if the image processing method provided by the embodiment shown in FIG. 4 is adopted, the image may cover the text, thereby affecting the clarity of the text.

In order to address the above technical issues, when the image part and the text part overlap, embodiments of the present disclosure provide another image processing method for image processing.

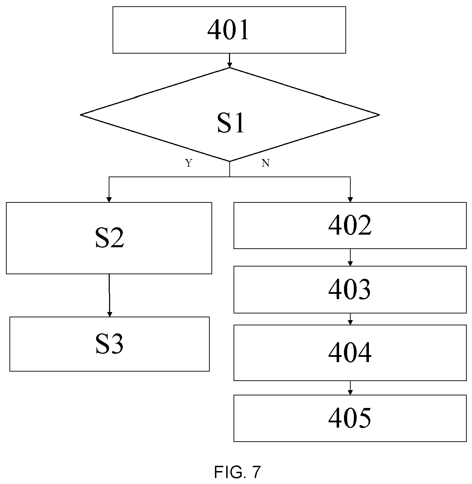

FIG. 7 is a schematic flow chart of an image processing method according to another embodiment of the present disclosure.

Referring to FIG. 7, prior to step S402, the following steps can also be included.

S1: Based on extracted text part and image part, determining whether there is an overlap between the text part and the image part. If there is no overlap, continue to execute S402. If there is an overlap, execute S2.

Specifically, the method of determining whether the text part and the image part overlap can include determining an outline area of the image part, and determining whether the pixel position of the text part overlaps the outline area of the image part.

In some embodiments, the outline area of the image can be determined based on coordinate information of the image. In one embodiment, the outline of the image can be determined simply by obtaining the minimum and maximum coordinates of the image. Specifically, a line segment can be determined based on the obtained minimum coordinate and maximum coordinate, and then a rectangular frame with the line segment as a diagonal can be determined as the outline area of the image. For example, the acquired image part includes two images, namely image A and image B. Further, the minimum coordinate and the maximum coordinate of image A can be obtained. Among them, the minimum coordinate is the intersection point M between the vertical line where the leftmost point of the image is located and the horizontal line where the topmost point of the image is located. The maximum coordinate is the intersection point N between the vertical line where the rightmost point of the image is located and the horizontal line where the bottommost point of the image is located. Point M and point N are connected to obtain a line segment MN. A rectangle is determined based on the line segment MN, and the line segment MN is the diagonal of the rectangle. The obtained rectangle is the outline area of image A. The outline area of image B can be determined based on the same method as described above, which will not be described again.

After obtaining the outline information of the image, it can be further determined whether the pixel position of the text part overlaps with the outline area of the image part. After it is determined that the pixel position of the text part overlaps with the outline area of the image part, it proceeds to executing S2.

S2: Generating a second image instruction based on the text part and the image part, and generating a target page description language based on the second image instruction.

Specifically, when it is determined that the pixel position of the text part overlaps with the outline area of the image part, the corresponding image-to-be-printed can be regarded as an image, thereby a corresponding second image instruction is generated. A target page description language is generated based on the second image instruction.

S3: Sending the target page description language to the image forming device to execute the image forming job.

In some embodiments, if S10 is included prior to S402, S1 can be executed prior to executing S10.

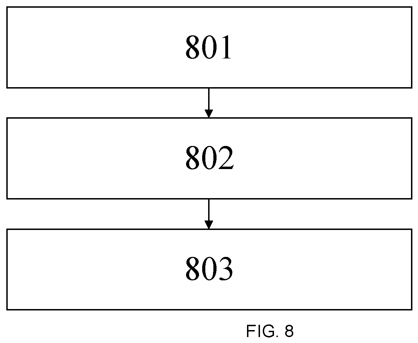

FIG. 8 is a schematic flow chart of an image processing method provided by another embodiment of the present disclosure.

Referring to FIG. 8, the image processing method is executed on an image forming device, and the method can include the following steps.

S801: Restoring the page based on a received target page description language.

S802: Performing different halftone conversions on the image and the text.

S803: Integrating the image and the text being different halftone converted into a raster image, and executing printing based on the raster image.

An image-text separated printed page (the page containing the target page description language) received by the image forming device (such as a printer) contains only one image instruction.

In some embodiments, the driver-end device can direct the image forming device (such as a printer) that the current job is an image-text separation job through a print driver.

After the printer receives a print job in which the image and the text are separated, different data processing methods need to be used because the image needs to be smooth and the text needs to have a clear edge. Therefore, in the process of restoring the page, different halftone conversions can be used for the image and the text. The raster image required by a printing engine can be synthesized and sent to the printing engine for printing.

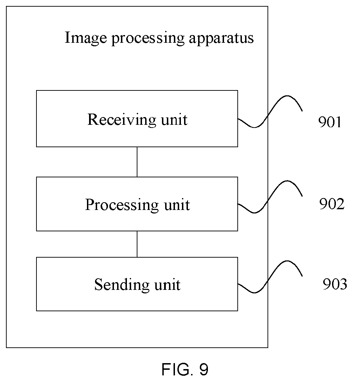

FIG. 9 is a schematic structural diagram of an image processing apparatus according to an embodiment of the present disclosure.

Referring to FIG. 9, the device includes a receiving unit 901, configured to obtain the image-to-be-printed, and extract the text part and the image part from the image-to-be-printed. The device includes a processing unit 902, configured to convert all the extracted image parts into the first image data on one page, convert the extracted text part into page description language, generate an image instruction based on the first image data and insert the image instruction into the page description language, and form a target page description language. The device includes a sending unit 903, configured to send the target page description language to an image forming device to execute an image forming job.

In some embodiments, before converting all the extracted image parts into the first image data on one page, the method further includes: creating a first page and a second page. The first page is used to describe the text part and the second page is used to describe the image part.

In some embodiments, converting all the extracted image parts into the first image data on one page includes: converting all the extracted image parts into pixel-level image data on the second page.

In some embodiments, before converting all the extracted image parts into the first image data on one page, the method further includes: based on the extracted text part and image part, determining whether the text part and the image part overlap. If there is no overlap, then continue to execute the step of converting all the extracted image parts into the first image data on one page. If there is an overlap, then cancel the subsequent steps, generate a second image instruction based on the text part and the image part, and send the page description language including the one second image instruction to the image forming device to execute the image forming job.

In some embodiments, determining whether the text part and the image part overlap includes: determining an outline area of the image part, and determining whether a pixel position of the text part overlaps the outline area of the image part.

In some embodiments, determining the outline area of the image part includes: determining the minimum coordinate and the maximum coordinate of the image in the image part, and determining a rectangular frame based on the minimum coordinate and the maximum coordinate as the outline area of the image.

In some embodiments, the first page and the second page execute a position update using a same cursor.

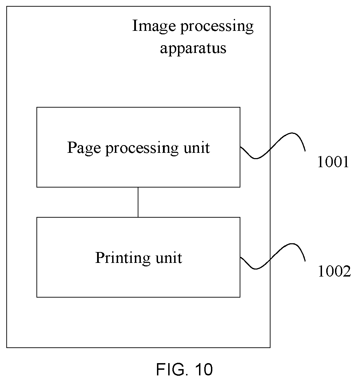

FIG. 10 is a schematic structural diagram of an image processing apparatus provided by another embodiment of the present disclosure.

Referring to FIG. 10, the device can include a page processing unit 1001, configured to restore the page based on the received target page description language, obtain a third page, and execute different halftone conversions on the image and the text in the third page. The device also includes a printing unit 1002, configured to integrate the halftone converted image and text into a raster image, and execute printing based on the raster image.

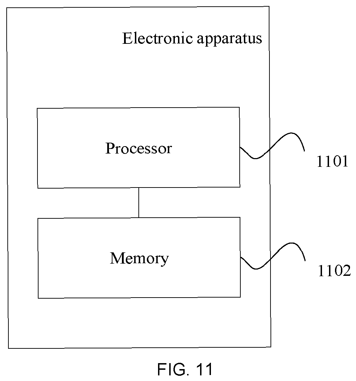

FIG. 11 is a schematic structural diagram of an electronic apparatus provided by an embodiment of the present disclosure.

Referring to FIG. 11, the device may include at least one processor 1101 and a memory 1102. The memory 1102 is used to store at least one instruction. The processor 1101 loads the instruction and executes the image processing method provided by any embodiment of the present disclosure. In some embodiments, the electronic apparatus can be a chip or a chip module.

Embodiments of the present disclosure also provide an image forming device, including an electronic apparatus provided by the embodiment shown in FIG. 11.

Embodiments of the present disclosure also provide an image processing system, including a driver-end device and at least one image forming device. Both the driver-end device and the image forming device include the electronic apparatus provided by the embodiment shown in FIG. 11. The driver-end device can at least implement the image processing method provided by the embodiments shown in FIG. 4 or FIG. 7.

Embodiments of the present disclosure also provide a computer-readable storage medium on which a computer program is stored. When the computer program is executed by the processor, the image processing method provided by any embodiment of the present disclosure is implemented.

Embodiments of the present disclosure also provide a computer program product, including a computer program or an instruction. When the computer program or the instruction is executed by the processor, the image processing method provided by any embodiment of the present disclosure is implemented.

It should be noted that a terminal involved in embodiments of the present disclosure includes, but are not limited to, personal computers (PCs), personal digital assistants (PDAs), wireless handheld devices, tablet computers, mobile phones, MP3 players, MP4 players, etc.

It can be understood that an application can be an application program installed in the terminal (nativeApp), or a web page program (webApp) of the browser in the terminal, which is not limited in embodiments of the present disclosure.

Those persons of skilled in the art can clearly understand that for the convenience and simplicity of description, the specific working processes of the system, device, and unit described above can be referred to the corresponding processes in embodiments of the present disclosure, and will not be described again.

In some embodiments, the disclosed system, apparatus, and method can be implemented in other ways. For example, the apparatus embodiment described above are only illustrative. For example, the division of the units is only a logical functional division. In actual implementation, there may be other division methods. For example, multiple units or components may be integrated. Either it can be integrated into another system, or some features can be ignored, or not implemented. On the other hand, the coupling or direct coupling or communication connection between each other shown or discussed may be through some interfaces, and an indirect coupling or communication connection of the apparatuses or units can be in electrical, mechanical, or other forms.

The units described as separate components may or may not be physically separated, and the components shown as units may or may not be physical units, that is, they may be in one place, or they may be distributed to multiple units in network. Some or all units can be selected according to actual needs to achieve the purpose of the solution of embodiments of the present disclosure.

In addition, each functional unit in various embodiments of the present disclosure may be integrated into one processing unit, or each unit may exist physically alone, or two or more units may be integrated into one unit. The above integrated unit can be implemented in the form of hardware or in the form of hardware plus software functional units.

The integrated unit implemented in the form of a software functional unit can be stored in a computer-readable storage medium. The software functional unit is stored in a storage medium and includes instructions to cause a computer device (which can be a personal computer, a server, or a network device, etc.) or a processor to execute some steps of the method described in various embodiments of the present disclosure. The storage medium includes: U disk, mobile hard disk, read-only memory (ROM), random access memory (RAM), magnetic disk, optical disk, or other medium that can store program code. It should be noted that the above embodiments are only used to illustrate the technical solution of the present disclosure, but not to limit it. Although the present disclosure has been described in detail with reference to the above embodiments, those persons of ordinary skill in the art should understand that the technical solutions described in the above embodiments can still be modified.

## Claims

1. An image processing method, applied to a driver-end device, comprising:
obtaining an image-to-be-printed on one page and extracting a text part and an image part from the image-to-be-printed;
determining whether there is an overlap between the text part and the image part;
when there is no overlap:
converting the extracted image part on the page into first image data;
converting the extracted text part into a page description language;
generating an image instruction based on the first image data and inserting the image instruction into the converted text part in the page description language to form a target page in the page description language containing only one image instruction; and
sending the target page in the page description language to an image forming device (100) to execute an image forming job, wherein
the extracted image part contains a multiplicity of extracted images; **characterized in that**
all extracted images are converted as an entire image into the first image data on the one page.

2. The image processing method according to claim 1, further comprising:
prior to converting all extracted images on the one page into the first image data, creating a first page and a second page, wherein the first page is configured to describe the text part, and the second page is configured to describe the image part; wherein the first page and second page are integrated into the target page by inserting the image instruction into the converted text part.

3. The image processing method according to claim 2, wherein converting all extracted images on the one page into first image data comprises:
converting all the extracted images into pixel-level image data on the second page.

4. The image processing method according to claim 1, comprising:
when there is an overlap, cancelling subsequent steps, generating one second image instruction based on the text part and the image part; and
sending the page description language that comprises the second image instruction to the image forming device (100) to execute the image forming job.

5. The image processing method according to claim 4, wherein determining whether there is the overlap between the text part and the image part comprises:
determining an outline area of the image part, and determining whether a pixel position of the text part overlaps with the outline area of the image part.

6. The image processing method according to claim 5, wherein determining the outline area of the image part comprises:
determining a minimum coordinate and a maximum coordinate of an image in the image part; and
determining an outline area of the image according to a rectangular frame determined by the minimum coordinate and the maximum coordinate.

7. An electronic apparatus, comprising:
at least one processor (1101) and a memory (1102) configured to store at least one instruction that, when being executed, causes the at least one processor (1101) to perform the image processing method according to any one of claims 1 to 6.

8. A non-transitory computer-readable storage medium storing a computer program that, when executed by a processor (1101), causes the processor (1101) to perform the method according to any one of claims 1 to 6.

## Patentansprüche

1. Ein Bildverarbeitungsverfahren, angewendet auf eine treiberseitige Vorrichtung, umfassend:
Erhalten eines auf einer Seite zu druckenden Bildes und Extrahieren eines Textteils und eines Bildteils aus dem zu druckenden Bild;
Bestimmen, ob eine Überlappung zwischen dem Textteil und dem Bildteil vorliegt;
wenn keine Überlappung vorliegt:
Umwandeln des extrahierten Bildteils auf der Seite in erste Bilddaten;
Umwandeln des extrahierten Textteils in eine Seitenbeschreibungssprache;
Erzeugen eines Bildbefehls auf der Grundlage der ersten Bilddaten und Einfügen des Bildbefehls in den umgewandelten Textteil in der Seitenbeschreibungssprache, um eine Zielseite in der Seitenbeschreibungssprache zu bilden, die nur einen Bildbefehl enthält; und
Senden der Zielseite in der Seitenbeschreibungssprache an ein Bildformungsgerät (100), um einen Bildformungsauftrag auszuführen, wobei
der extrahierte Bildteil eine Mehrzahl extrahierter Bilder enthält; **dadurch gekennzeichnet, dass**
alle extrahierten Bilder auf der einen Seite als ein Gesamtbild in die ersten Bilddaten umgewandelt werden.

2. Das Bildverarbeitungsverfahren nach Anspruch 1, ferner umfassend:
vor dem Umwandeln aller extrahierten Bilder auf der einen Seite in die ersten Bilddaten, Erzeugen einer ersten Seite und einer zweiten Seite, wobei die erste Seite dazu ausgebildet ist, den Textteil zu beschreiben, und die zweite Seite dazu ausgebildet ist, den Bildteil zu beschreiben; wobei die erste Seite und die zweite Seite durch Einfügen des Bildbefehls in den umgewandelten Textteil in die Zielseite integriert werden.

3. Das Bildverarbeitungsverfahren nach Anspruch 2, wobei das Umwandeln aller extrahierten Bilder auf der einen Seite in erste Bilddaten umfasst:
Umwandeln aller extrahierten Bilder in Bilddaten auf Pixelebene auf der zweiten Seite.

4. Das Bildverarbeitungsverfahren nach Anspruch 1, umfassend:
wenn eine Überlappung vorliegt, Abbrechen nachfolgender Schritte, Erzeugen eines zweiten Bildbefehls auf der Grundlage des Textteils und des Bildteils; und
Senden der Seitenbeschreibungssprache, die den zweiten Bildbefehl umfasst, an das Bildformungsgerät (100), um den Bildformungsauftrag auszuführen.

5. Das Bildverarbeitungsverfahren nach Anspruch 4, wobei das Bestimmen, ob die Überlappung zwischen dem Textteil und dem Bildteil vorliegt, umfasst:
Bestimmen eines Umrissbereichs des Bildteils und Bestimmen, ob eine Pixelposition des Textteils mit dem Umrissbereich des Bildteils überlappt.

6. Das Bildverarbeitungsverfahren nach Anspruch 5, wobei das Bestimmen des Umrissbereichs des Bildteils umfasst:
Bestimmen einer minimalen Koordinate und einer maximalen Koordinate eines Bildes in dem Bildteil; und
Bestimmen eines Umrissbereichs des Bildes gemäß einem rechteckigen Rahmen, der durch die minimale Koordinate und die maximale Koordinate bestimmt ist.

7. Eine elektronische Vorrichtung, umfassend:
mindestens einen Prozessor (1101) und einen Speicher (1102), der dazu ausgebildet ist, mindestens eine Anweisung zu speichern, die, wenn sie ausgeführt wird, den mindestens einen Prozessor (1101) veranlasst, das Bildverarbeitungsverfahren nach irgendeinem der Ansprüche 1 bis 6 durchzuführen.

8. Ein nicht-transitorisches computerlesbares Speichermedium, das ein Computerprogramm speichert, das, wenn es von einem Prozessor (1101) ausgeführt wird, den Prozessor (1101) veranlasst, das Verfahren nach irgendeinem der Ansprüche 1 bis 6 durchzuführen.

## Revendications

1. Un procédé de traitement d'image, appliqué à un dispositif côté pilote, comprenant :
obtenir une image à imprimer sur une page et extraire une partie de texte et une partie d'image de l'image à imprimer ;
déterminer s'il existe un chevauchement entre la partie de texte et la partie d'image ;
lorsqu'il n'existe aucun chevauchement :
convertir la partie d'image extraite sur la page en premières données d'image ;
convertir la partie de texte extraite en un langage de description de page ;
générer une instruction d'image sur la base des premières données d'image et insérer l'instruction d'image dans la partie de texte convertie dans le langage de description de page afin de former une page cible dans le langage de description de page ne contenant qu'une seule instruction d'image ; et
envoyer la page cible dans le langage de description de page à un dispositif de formation d'image (100) afin d'exécuter une tâche de formation d'image, dans lequel
la partie d'image extraite contient une pluralité d'images extraites ; **caractérisé en ce que**
toutes les images extraites sur ladite page sont converties, en tant qu'image entière, en premières données d'image.

2. Le procédé de traitement d'image selon la revendication 1, comprenant en outre :
avant de convertir toutes les images extraites sur ladite page en premières données d'image, créer une première page et une deuxième page, dans lequel la première page est configurée pour décrire la partie de texte, et la deuxième page est configurée pour décrire la partie d'image ; dans lequel la première page et la deuxième page sont intégrées dans la page cible en insérant l'instruction d'image dans la partie de texte convertie.

3. Le procédé de traitement d'image selon la revendication 2, dans lequel la conversion de toutes les images extraites sur ladite page en premières données d'image comprend :
convertir toutes les images extraites en données d'image au niveau des pixels sur la deuxième page.

4. Le procédé de traitement d'image selon la revendication 1, comprenant :
lorsqu'il existe un chevauchement, annuler les étapes suivantes, générer une deuxième instruction d'image sur la base de la partie de texte et de la partie d'image ; et
envoyer le langage de description de page qui comprend la deuxième instruction d'image au dispositif de formation d'image (100) afin d'exécuter la tâche de formation d'image.

5. Le procédé de traitement d'image selon la revendication 4, dans lequel la détermination de l'existence du chevauchement entre la partie de texte et la partie d'image comprend :
déterminer une zone de contour de la partie d'image, et déterminer si une position de pixel de la partie de texte chevauche la zone de contour de la partie d'image.

6. Le procédé de traitement d'image selon la revendication 5, dans lequel la détermination de la zone de contour de la partie d'image comprend :
déterminer une coordonnée minimale et une coordonnée maximale d'une image dans la partie d'image ; et
déterminer une zone de contour de l'image selon un cadre rectangulaire déterminé par la coordonnée minimale et la coordonnée maximale.

7. Un appareil électronique, comprenant :
au moins un processeur (1101) et une mémoire (1102) configurée pour stocker au moins une instruction qui, lorsqu'elle est exécutée, amène ledit au moins un processeur (1101) à exécuter le procédé de traitement d'image selon l'une quelconque des revendications 1 à 6.

8. Un support de stockage lisible par ordinateur non transitoire stockant un programme informatique qui, lorsqu'il est exécuté par un processeur (1101), amène le processeur (1101) à exécuter le procédé selon l'une quelconque des revendications 1 à 6.
